# EUROPEAN PATENT APPLICATION

(11) **EP 4 775 035 A1**
(43) Date of publication of application: **15.07.2026**
(21) Application number: 24862996.6
(22) Date of filing: 11.07.2024
(51) Int. Cl.: A01N 63/10, A01P 15/00, C09D 7/40, A01M 29/08, E01F 8/00

(54) **ADDITIVE FOR PREVENTING BIRD COLLISION, COMPOSITION FOR PREVENTING BIRD COLLISION USING SAME, AND MATERIAL FOR PREVENTING BIRD COLLISION**

(30) Priority: 07.09.2023 KR 20230119102
(71) Applicant: Birdstrikesafe Co., Ltd., Busan 47258 (KR)
(72) Inventor: LEE, Jin Hee, Pyeongtaek-si Gyeonggi-do 17732 (KR)
(74) Representative: AWA Sweden AB
(86) International application number: PCT/KR2024/009903
(87) International publication number: WO 2025/053413

(57) **Abstract**

The present invention relates to an additive for preventing bird collisions using animal urine, a composition for preventing bird collisions using same, and a material for preventing bird collisions. More specifically, the present invention is characterized by constituting various compositions and materials for preventing bird collisions by including an extract extracted from animal urine, wherein the extract has a function of reflecting ultraviolet rays. The additive for preventing bird collisions, the composition for preventing bird collisions using same, and the material for preventing bird collisions of the present invention have the advantage of stably preventing flying birds from colliding with a noise barrier made of a transparent material, an aircraft, and the like by reflecting ultraviolet rays to allow the flying birds to recognize the same as obstacles.

## Description

### [Technical Field]

The present invention relates to an additive for preventing bird collisions using animal urine, a composition for preventing bird collisions using the same, and a material for preventing bird collisions, and more particularly, to an additive for preventing bird collisions including an extract extracted from animal urine, which stably prevents bird collisions by applying the additive to various materials for preventing bird collisions such as paints, glass, sealants, film compositions, and glass frames, and a composition for preventing bird collisions using the same, and a material for preventing bird collisions.

### [Background Art]

With the recent improvement in the quality of windows made of transparent materials, soundproof windows, and the like, wild birds are frequently dying after colliding with glass windows. This threatens the healthy natural ecosystem and causes environmental problems such as the spread of infectious diseases from dead birds. Bird collisions have resulted in glass breakage and secondary damage, causing problems such as human injuries and even psychological trauma. Therefore, there is an increasing need for preventing bird collisions.

To solve these problems, reflective films are conventionally installed or stickers with a specific shape having an adhesive surface are attached to glass at regular intervals to prevent birds from colliding with the glass.

Among the places in which bird collision reduction measures have been taken in Korea to prevent bird collisions, raptor stickers have been reported to be ineffective, and bird collision reduction stickers are sequentially attached to noise barriers, with which 230,000 birds collide annually, by applying the 5×10 rule (5 cm vertical spacing and 10 cm horizontal spacing). However, according to the records of NATURING (wild bird window collision survey), bird collisions are frequently reported not only with the bird collision reduction stickers applied under the current 5×10 rule stickers for bird collision reduction but also with bird collision reduction stickers applied under the 5×5 rule. This demonstrates that birds, which fly fast at an average speed of 36 to 72 km/h, do not meaningfully recognize the bird collision reduction stickers applied according to current standards.

Also, according to the data from the Ministry of Environment and the National Institute of Ecology, it is reported that the estimated number of birds collisions with buildings is 7.65 million per year, meaning that there is more than one bird collision per building per year. It is estimated that collisions with buildings are approximately 33 times more common than collisions with noise barriers. In particular, buildings are difficult for both birds and people to perceive due to the reflective nature of glass. Attaching bird collision reduction stickers applied under the 5x10 rule and 5x5 rule to the interiors of more than 80% of private buildings is ineffective due to the glass coating and reflectivity, and external attachment is mostly not even considered.

In addition, these types of stickers for preventing bird collisions require a lot of manpower during construction, and must be applied to all glass surfaces at precise intervals, which results in increased construction costs. Furthermore, the stickers easily peel off due to various environmental factors, making maintenance difficult.

Therefore, films having patterns applied at regular intervals have been recently attached to transparent glass to improve work efficiency and maintain their shape even under external impacts such as rain and wind, making maintenance easier.

However, these films had disadvantages such as reducing the transparency of the glass, thereby impairing the view.

Meanwhile, birds have much better color vision than humans, allowing the birds to see a wider range of colors more than humans. While humans can only see visible light with three cones, birds have four cones and thus can see a wide range of colors, including ultraviolet rays having a wavelength of 300 to 400 nm. In other words, most birds have photoreceptors that absorb ultraviolet rays, allowing the birds to see colors in the ultraviolet range, and use this ultraviolet vision to find prey and choose mates.

One way to find prey using ultraviolet vision is through animal urine. Animal urine reflects ultraviolet rays so the birds can use ultraviolet vision to detect animal urine patterns in nature, thereby tracking and hunting the movements of animals like rats.

### [Detailed Description of Invention]

### [Technical Problem]

Accordingly, the present invention is directed to providing an additive for preventing bird collisions, which prevents birds from colliding with obstacles made of transparent materials using their photoreceptors that absorb ultraviolet rays, and is capable of allowing birds to recognize obstacles by reflecting ultraviolet rays without impairing transparency using an extract extracted from animal urine.

The present invention is also directed to constituting various materials for preventing bird collisions, as well as paints, glass, sealants, and film compositions, using such an additive.

Also, the present invention is directed to providing a composition and material for preventing bird collisions capable of allowing birds to recognize obstacles not only during external construction but also during internal construction of the obstacles.

### [Technical Solution]

To solve the above problems, the additive for preventing bird collisions of the present invention is composed of an extract extracted from animal urine, wherein the extract is characterized by having a function of reflecting ultraviolet rays.

The extract is characterized by being a precipitate obtained by centrifuging the animal urine.

The composition for preventing bird collisions according to the present invention is characterized by including the above-mentioned additive for preventing bird collisions.

The additive is characterized by being included in an amount of 5 to 30% by weight based on 100% by weight of the composition for preventing bird collisions.

Also, the material for preventing bird collisions according to the present invention is characterized by including the above-described composition for preventing bird collisions.

The material is characterized by being a film or glass for preventing bird collisions, which is formed of the composition for preventing bird collisions.

The material is characterized by being a glass frame that has the composition for preventing bird collisions applied to part or all of the surface thereof.

The material is a glass frame, and has the composition for preventing bird collisions applied to part or all of the surface thereof.

The material is characterized by being an interior/exterior building material, which includes a glass frame 100; a glass 200 installed in the glass frame 100; and a sealant 300 applied to the contact surface between the glass frame 100 and the glass 200 and cured, wherein the glass frame 100 has the composition for preventing bird collisions applied to part or all of the surface thereof; the glass 200 is composed of the composition for preventing bird collisions, or has a film, which is formed of the composition for preventing bird collisions, attached to part or all of the surface thereof; and the sealant 300 is composed of the composition for preventing bird collisions.

### [Advantageous Effects]

The additive for preventing bird collisions, the composition for preventing bird collisions using the same, and the material for preventing bird collisions of the present invention have the advantage of stably preventing flying birds from colliding with noise barriers made of a transparent material, aircraft, and the like by reflecting ultraviolet rays to allow the flying birds to recognize the same as obstacles.

### [Description of Drawings]

FIG. 1 is a perspective view of an interior/exterior building material according to one embodiment of the present invention.
FIG. 2 is an image of a precipitate obtained through centrifugation of urine according to Example 1 of the present invention.
FIG. 3 is a polarizing micrograph according to Test Example 1 of the present invention.
FIG. 4 is an image showing the results of Test Example 2 of the present invention.
FIG. 5 is an image showing the presence or absence of UV reflection according to Test Example 3 of the present invention.
FIG. 6 is an image showing the results of a UV (365 nm) reflection test.

### [Mode for Invention]

Hereinafter, the present invention will be described in detail.

The most significant feature of the additive for preventing bird collisions according to the present invention is that the additive prevents birds from colliding with obstacles made of transparent materials, such as glass, using the birds' ultraviolet vision and animal urine that reflects ultraviolet rays.

In addition, another significant feature is that compositions and materials including the additive enable birds to easily recognize obstacles even when the compositions and materials are installed inside obstacles.

Specifically, the additive for preventing bird collisions according to the present invention is composed of an extract extracted from animal urine, wherein the extract is characterized by having a function of reflecting ultraviolet rays.

As described above, animal urine reflects ultraviolet rays, and the present invention has developed an additive for preventing bird collisions based on this fact. In nature, birds can see the morphological characteristics of animal urine marks using ultraviolet vision, and identify urine marks through this ultraviolet vision, and track prey based on the identified urine marks. Specifically, birds can identify not only animal urine but also numerous objects that reflect ultraviolet rays through ultraviolet vision, and thus ultraviolet reflection allows birds to easily recognize obstacles. Therefore, the present invention utilizes an extract of animal urine among ultraviolet reflectors, wherein the extract has low manufacturing costs and has ultraviolet reflectivity that makes it easy for birds to identify it as an obstacle.

The extract extracted from the animal urine is a precipitate obtained by centrifuging animal urine. More specifically, the extract is a precipitate collected after primarily centrifuging animal urine at 3,000 to 4,000 rpm, discarding the supernatant, and secondarily centrifuging the animal urine at 3,000 to 4,000 rpm. Such a precipitate reflects ultraviolet rays, and thus birds recognize the precipitate as an obstacle through ultraviolet reflection when the precipitate is included in various compositions and materials for preventing bird collisions.

At this time, the centrifugation time is not limited, but centrifuging urine for 5 to 60 minutes is sufficient in consideration of the amount of urine. The urine may be used regardless of the type of animal, such as a rabbit, a dog, a human, and the like, excrement containing urine may also be used.

Meanwhile, the additive for preventing bird collisions according to the present invention may include a magnetic mineral along with the urine extract. In this case, the weight ratio of the urine extract and the magnetic mineral preferably ranges from approximately 10:1 to 4.

The magnetic mineral exhibits ferromagnetism, which induces magnetic field changes, enabling flying birds to recognize obstacles through their magnetoreception. In other words, when the additive further includes the magnetic mineral, birds may recognize obstacles not only through UV reflection but also through their magnetoreception, thereby more stably preventing bird collisions regardless of weather conditions.

At this time, one or more of magnetite, hematite, maghemite, pyrrhotite, greigite, and goethite are preferably used as the magnetic mineral. In addition, it goes without saying that various types of known ferromagnetic minerals may also be used. Also, the magnetic mineral is included in the form of powder, and preferably has a particle size of approximately 100 to 325 mesh.

First, the additive for preventing bird collisions according to the present invention may be applied to various compositions for preventing bird collisions. In this case, the composition may be any one of a paint composition, a glass composition, a sealant composition, and a film composition.

Also, the additive is preferably included in an amount of approximately 5 to 30% by weight based on 100% by weight of the composition for preventing bird collisions. This is because when the content of the additive is less than 5% by weight, ultraviolet reflectivity deteriorates, which makes it impossible to sufficiently prevent bird collisions
The composition for preventing bird collisions may be a paint composition.

The paint composition may be applied to glass for noise barriers, glass for building exterior windows, glass frames, films for preventing bird collisions, aircraft, and the like, and may also be applied to various interior/exterior building materials, and its applications are not limited. In other words, the paint composition may be applied to not only architectural paint compositions but also aircraft paint compositions.

At this time, the paint composition may be manufactured by adjusting the transparency according to the intended use, and may be recognized as an obstacle by birds by reflecting ultraviolet rays when irradiated with ultraviolet rays.

When the paint composition is prepared, 5 to 30% by weight of the additive is mixed with 70 to 95% by weight of a general paint, i.e., a base paint. In this case, the base paint may be formed with various compositions of paints known in the art. In addition, the paint composition may be formed as an oil-based composition or a water-based composition, and the implementation thereof is not limited. Also, the base paint may be a transparent base paint, but it is of course also possible to use a colored base paint.

The composition for preventing bird collisions may be a glass composition.

This composition is also prepared by mixing 5 to 30% by weight of the additive with 70 to 95% by weight of a general glass composition, and the composition of the general glass composition may be any previously published composition. For example, the general glass composition may be composed of 10 to 20% by weight of Na₂O, 5 to 15% by weight of CaO, 0.05 to 5% by weight of MgO, 0.05 to 5% by weight of Al₂O₃, 0.01 to 5% by weight of K₂O, and the remainder as SiO₂. The composition is composed by mixing 5 to 30% by weight of the additive of the present invention with 70 to 95% by weight of a general glass composition having the above composition, and is molded to manufacture a glass product. At this time, the general glass composition may be a transparent glass composition, but it is of course also possible to use a colored glass composition.

The glass composition for preventing bird collisions also effectively reflect ultraviolet rays without impairing the transparency of the product, thereby preventing bird collisions.

The composition for preventing bird collisions may be a sealant composition.

Specifically, the sealant composition is prepared by mixing 5 to 30% by weight of the above-described additive with 70 to 95% by weight of a sealant composition. In this case, the sealant composition may be any previously published composition. For example, the sealant composition may be composed of 20 to 30% by weight of a plasticizer, 5 to 10% by weight of a crosslinking agent, and the remainder as a silicone base polymer. It goes without saying that the sealant composition may further include additives such as adhesion promoters, fillers, and the like. The sealant composition may be transparent, but it goes without saying that a colored sealant composition may also be used.

The sealant composition for preventing bird collisions of the present invention also effectively reflects ultraviolet rays without impairing the transparency of the product, thereby preventing bird collisions.

Also, the composition for preventing bird collisions may be a film composition.

At this time, the film composition is prepared by mixing 5 to 30% by weight of the additive of the present invention with 70 to 95% by weight of a resin for a base film. At this time, the resulting mixture may be molded and cured to produce a film. Here, the resin for a base film may be any epoxy resin or silicone resin as disclosed in the art, but the present invention is not limited thereto. Also, it is obvious that the resin for a base film may be one of various other film material resins. In addition, the resin for a base film may be a transparent resin, but it is also obvious that a colored resin may be used.

In addition, such a film composition may be molded into a sticker-type film. A film is molded by mixing 5 to 30% by weight of the additive of the present invention with 70 to 95% by weight of the resin for a base film, and an adhesive layer and a release paper are sequentially formed on the lower surface of the film to provide a sticker-type film for preventing bird collisions as used in the art.

Furthermore, the additive for preventing bird collisions and the composition for preventing bird collisions according to the present invention may be applied to various materials. In this case, the type of material is not limited as long as it is intended to prevent bird collisions, and the material for preventing bird collisions according to the present invention is configured to include the above-described additive for preventing bird collisions or the above-described composition for preventing bird collisions.

Here, the material for preventing bird collisions may be a film for preventing bird collisions. The film for preventing bird collisions may be manufactured by molding and curing the film composition for preventing bird collisions as described above, or may be formed by applying the composition for preventing bird collisions described above to part or all of the surface of a general base film. Regardless of how the film is formed, the film may stably prevent bird collisions. At this time, the paint composition may be applied in the form of dots, lines, and the like as known in the art, but the spacing should be such that the vertical pattern width is 6 mm or more, the pattern spacing is 10 cm or less, and the horizontal pattern width is 3 mm or more and the pattern spacing is 5 cm or less, as stipulated by the Ministry of Environment.

Furthermore, such films for preventing bird collisions may be provided in the form of commercially available stickers. This may be achieved by forming an adhesive layer on the back of the film and providing a release paper on the adhesive layer. Such sticker-type films may be applied to the conventionally constructed noise barriers, glass windows, and the like.

Also, the material for preventing bird collisions may be glass. The glass for preventing bird collisions may be molded using the glass composition described above, may be formed by adhering the film for preventing bird collisions described above to the surface of general transparent glass, or may be formed by applying the paint composition for preventing bird collisions described above to the surface of general transparent glass, but the implementation thereof is not limited thereto.

In addition, the material for preventing bird collisions according to the present invention may be a glass frame. The glass frame may be molded so that the glass frame can include the additive for preventing bird collisions according to the present invention, or may be formed by applying the paint composition for preventing bird collisions to part or all of the surface of the glass frame, but the implementation thereof is not limited thereto.

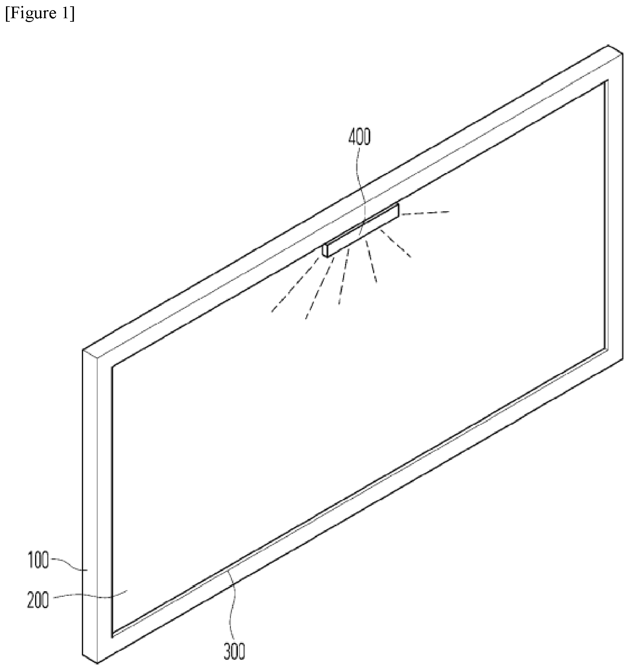

Furthermore, as shown in FIG. 1, the material according to the present invention is an interior/exterior building material, and includes a glass frame 100; a glass 200 installed in the glass frame 100; and a sealant 300 applied the contact surface between the glass frame 100 and the glass 200 and cured, wherein the glass frame 100 has the composition for preventing bird collisions applied to part or all of the surface thereof, the glass 200 is composed of the composition for preventing bird collisions, or has a film, which is formed of the composition for preventing bird collisions, attached to part or all of the surface thereof, and the sealant 300 is composed of the composition for preventing bird collisions, thereby safely preventing bird collisions with the entire interior/exterior building material.

In addition, the interior and exterior building material may further include an ultraviolet light 400. The ultraviolet light 400 supplies ultraviolet rays to the glass 200, the glass frame 100, and the sealant 300, so that the glass 200, the glass frame 100, and the sealant 300 are continuously supplied with ultraviolet rays regardless of the weather or time of day, thereby reflecting the ultraviolet rays to help birds to clearly recognize them as obstacles.

At this time, the ultraviolet light 400 is known in the art, and the method of applying a power source to the ultraviolet light 400 is also known in the art, and thus a further description thereof is omitted.

Also, the installation location of the ultraviolet light 400 is not limited, but the ultraviolet light 400 may be, for example, installed on one side of the glass frame 100 to efficiently supply ultraviolet rays to the installed interior/exterior building material, while installing a separate solar panel (not shown) to stably supply a power source.

In addition, the additive for preventing bird collisions according to the present invention is included and used during the molding of various interior/exterior building materials, and thus may reflect ultraviolet rays. Therefore, the use of the additive for preventing bird collisions is not limited.

Further, it is obvious that the paint composition and film for preventing bird collisions according to the present invention may stably prevent bird collisions when the paint composition and film are applied and adhered to various articles and materials to prevent bird collisions. Therefore, the use of the paint composition and film is not limited. However, when the paint composition and film are applied and adhered to have patterns such as dots, lines, and the like, the spacing should be such that the vertical pattern width is 6 mm or more, the pattern spacing is 10 cm or less, and the horizontal pattern width is 3 mm or more, and the pattern spacing is 5 cm or less, as stipulated by the Ministry of Environment.

Hereinafter, the present invention will be described in detail with reference to specific embodiments.

### (Example 1)

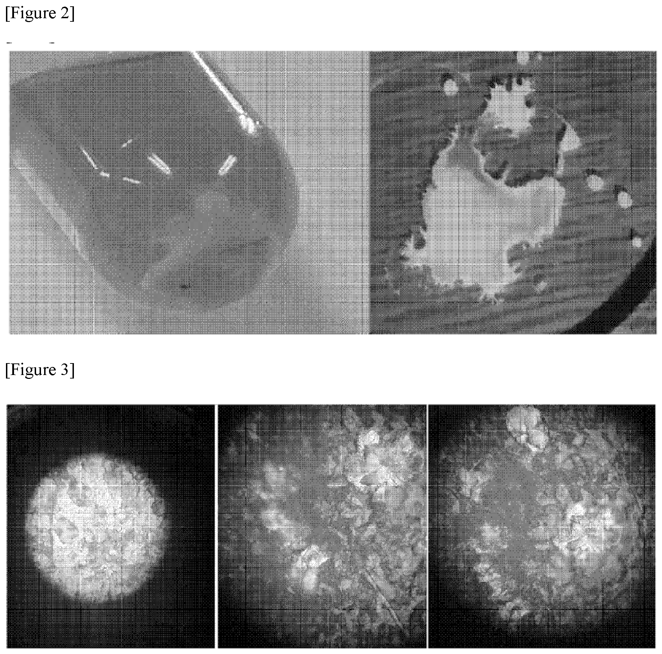

500 mL of dog urine was prepared and centrifuged at 3,500 rpm for 10 minutes. Thereafter, the supernatant was removed, and the remainder was secondarily centrifuged at 3,500 rpm for 10 minutes. Then, a white precipitate (urine extract) was obtained from the secondarily centrifuged precipitate. FIG. 2 is an image showing the precipitation state of the precipitate in the centrifuge and the obtained precipitate.

### (Example 2)

90 g of soft transparent epoxy (weight ratio of base and hardener: 2:1) was added to 14 g of the extract obtained from Example 1, and mixed, and the resulting mixture was molded into a film having a thickness of 0.5, mm and cured.

### (Test Example 1)

An image of the extract obtained through Example 1 was captured using a polarizing microscope, and the results are shown in FIG. 3.

As shown in FIG. 3, it can be seen that the extract extracted from urine according to the present invention exhibited light reflection.

### (Test Example 2)

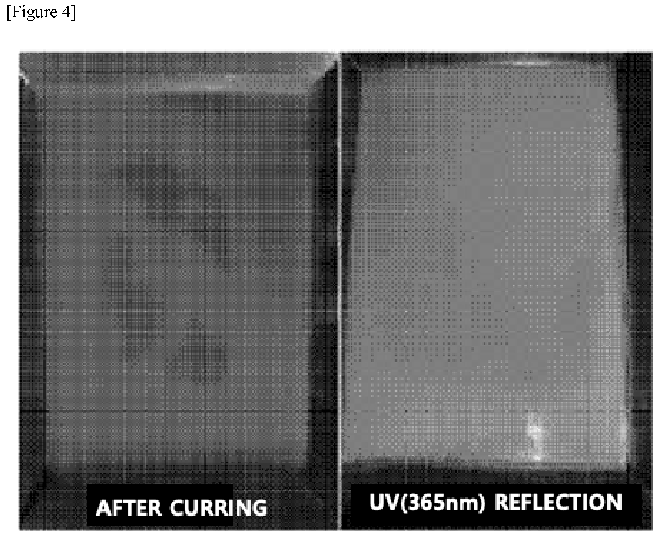

The film manufactured through Example 2 was exposed to UV (365 nm) to check for the presence or absence of UV reflection. The results are shown in FIG. 4.

As shown in FIG. 4, it can be seen that the film of Example 2 reflects ultraviolet rays.

### (Test Example 3)

After one side of a tent was opened, a general transparent film was attached to the open side of the tent. Thereafter, on the left inner center of the transparent film, the film manufactured in Example 2 was cut into 8 mm wide and 8 mm long sizes and attached at 5 cm intervals from top to bottom, left to right, and on the right inner center, commercially available stickers for preventing bird collisions were attached at the same intervals as the left side.

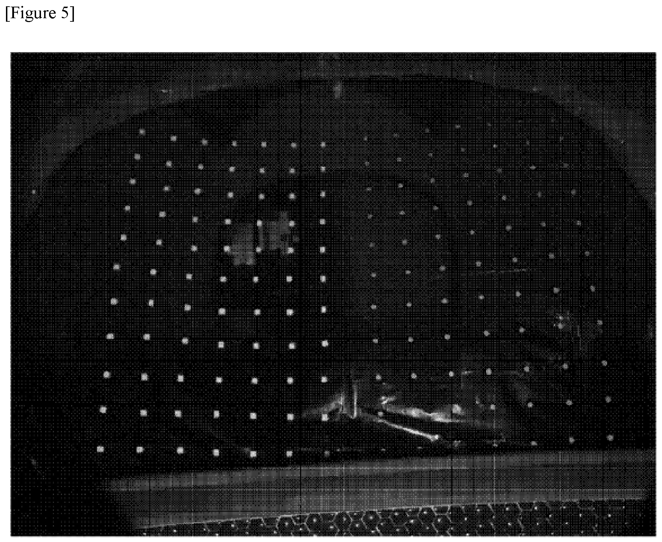

Also, the presence or absence of ultraviolet reflection by UV (365 nm) at night was checked, and the results are shown in FIG. 5. The number of collisions was confirmed by leaving the tent for 24 hours and filming to see if there were collisions with birds.

**[Table 1]**

| Results of Test Example 3 | | | |
|---|---|---|---|
| Classification | Attachment surface of Example 2 | Attachment surface of commercially available sticker for preventing bird collisions (Comparative Example) | Surface of transparent film (Control) |
| Number of collisions for 24 hours | 4 | 20 | 50 |

As a result, as shown in Table 1 above, it was confirmed that the birds collided 4 times in 24 hours on the left center of the tent to which the film according to the present invention was attached, whereas the birds collided 20 times on the right center of the tent to which the commercially available sticker for preventing bird collisions was attached, and collided approximately 50 or more times on the transparent left, right, and top areas to which the stickers were not attached.

Accordingly, it was confirmed that the film of Example 2 according to the present invention not only prevents bird collisions more effectively than conventional stickers for preventing bird collisions, but also prevents bird collisions even when installed inside an obstacle.

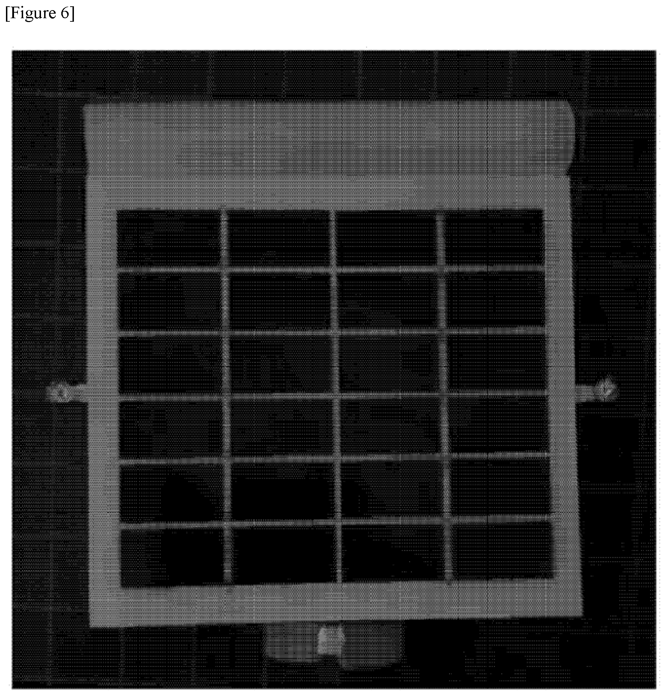

In addition to FIG. 5, FIG. 6 is an image showing the results of a UV (365 nm) reflection test.

As described above, the additive, composition and material for preventing bird collisions according to the present invention have the advantage of stably preventing flying birds from colliding with noise barriers made of a transparent material, and the like by reflecting ultraviolet rays without impairing the transparency of the product, and have the advantage of being applicable not only to noise barriers but also to various paint compositions, glass compositions, sealant compositions, film compositions, and even to interior/exterior building materials. Also, the additive, composition and material for preventing bird collisions according to the present invention have the advantage of being capable of being constructed inside obstacles.
100: glass frame
200: glass
300: sealant
400: ultraviolet light

## Claims

1. An additive for preventing bird collisions comprising an extract extracted from animal urine,
wherein the extract has a function of reflecting ultraviolet rays, and is a precipitate obtained by centrifuging the animal urine.

2. A composition for preventing bird collisions comprising the additive for preventing bird collisions of claim 1.

3. The composition of claim 2, wherein the additive is included in an amount of approximately 5 to 30% by weight based on 100% by weight of the composition for preventing bird collisions.

4. The composition of claim 2, wherein the composition is any one of a paint composition, a glass composition, a film composition, and a sealant composition, and
the paint composition is one of an architectural paint composition and an aircraft paint composition.

5. A material for preventing bird collisions comprising the composition for preventing bird collisions of claim 2.

6. The material of claim 5, wherein the material is a film or glass for preventing bird collisions, and is formed of the composition for preventing bird collisions.

7. The material of claim 5, wherein the material is a glass frame, and has the composition for preventing bird collisions applied to part or all of the surface thereof.

8. The material of claim 5, wherein the material is an interior/exterior building material, which comprises:
a glass frame (100);
a glass (200) installed in the glass frame (100); and
a sealant (300) applied to the contact surface between the glass frame (100( and the glass (200) and cured,
wherein the glass frame (100) has the composition for preventing bird collisions applied to part or all of the surface thereof;
the glass (200) is composed of the composition for preventing bird collisions, or has a film, which is formed of the composition for preventing bird collisions, attached to part or all of the surface thereof; and
the sealant (300) is composed of the composition for preventing bird collisions.
